# FASCICULE DE BREVET EUROPEEN

(11) **EP 3 023 734 B1**
(45) Date de publication et mention de la délivrance du brevet: **09.08.2017**
(21) Numéro de dépôt: 15194861.9
(22) Date de dépôt: 17.11.2015
(51) Int. Cl.: F42C 15/188, F42C 15/40

(54) **DISPOSITIF D'ARMEMENT ET DE SÉCURITÉ**
VORRICHTUNG ZUM SCHARFMACHEN UND SICHERN
ARMING AND SAFETY DEVICE

(30) Priorité: 24.11.2014 FR 1461338
(43) Date de publication de la demande: 25.05.2016
(73) Titulaire: PYROALLIANCE, 78130 Les Mureaux (FR); Techspace Aero, 4041 Milmort - Herstal (BE)
(72) Inventeur: BOMAL, Jean-Christian, 4633 Melen (BE); FRIPPIAT, Cédric, 4910 Theux (BE); LAMONTAGNE, Christophe, 78930 Guerville (FR)
(74) Mandataire: Desormiere, Pierre-Louis

(56) Documents cités:
- DE-C1- 3 503 013
- US-A- 3 618 527
- US-A- 3 658 009
- US-A- 5 279 226

## Description

### Arrière-plan de l'invention

Le présent exposé concerne la sécurisation de systèmes pyrotechniques.

Plus particulièrement, le présent exposé concerne un dispositif d'armement et de sécurité pour une chaîne pyrotechnique, du type comprenant :
- un boîtier présentant une zone d'entrée pour un flux pyrotechnique et une zone de sortie pour ledit flux pyrotechnique,
- un élément d'armement logé dans ce boîtier, entre les zones d'entrée et de sortie, et adapté à se déplacer entre une position désarmée dans laquelle il bloque le passage du flux pyrotechnique entre la zone d'entrée et la zone de sortie et une position armée dans laquelle il permet le passage du flux pyrotechnique entre la zone d'entrée et la zone de sortie, et
- des moyens d'entraînement de l'élément d'armement entre sa position armée et sa position désarmée, comprenant un moteur électrique muni d'un rotor et d'un stator.

Le dispositif d'armement et de sécurité selon l'invention est particulièrement adapté pour être utilisé dans le domaine aéronautique, dans des chaînes d'allumage, de destruction ou de séparation d'étages de lanceur spatial.

On connaît déjà, notamment du brevet américain US 3,618,527, des dispositifs d'armement et de sécurité du type précité.

Dans ce type de dispositif, l'arbre moteur traverse le boîtier. L'étanchéité du boîtier autour de l'arbre moteur est assurée par des joints dynamiques, montés très serrés.

De plus, les dispositifs connus utilisent généralement des moteurs à balais au lieu de systèmes électroniques de commande, peu fiables. On sait cependant que les balais de ce type de moteur s'oxydent facilement avec le temps, en particulier dans des conditions de pression très faible, notamment dans un environnement sous vide.

Après de longues périodes sans actionnement, l'élément d'armement peut ainsi rester coincé du fait de l'oxydation des balais du moteur électrique et/ou du fait de l'adhérence de l'arbre moteur aux joints dynamiques destinés à assurer son étanchéité avec le boîtier.

Pour éviter le coincement de l'arbre moteur, une force motrice élevée est nécessaire. Aujourd'hui, les dispositifs utilisent dans ce but des motoréducteurs à engrenages droits ou à vis sans fin. La multiplication du nombre de pièces diminue cependant la fiabilité du dispositif. Elle augmente aussi les dimensions et la masse du dispositif.

Par ailleurs, l'augmentation de la force motrice rend indispensable la mise en place d'un dispositif de limitation de couple pour gérer les fins de course.

En conséquence, les dispositifs de l'art antérieur sont lourds, peu fiables, et peu économiques.

### Objet et résumé de l'invention

L'un des objectifs de la présente invention est de fournir un dispositif d'armement et de sécurité permettant de remédier aux inconvénients de l'art antérieur énoncés ci-dessus.

En particulier, la présente invention a pour objet un dispositif d'armement et de sécurité qui permette d'éviter les problèmes de coincement de l'élément d'armement, notamment après de longues périodes sans fonctionnement, et qui soit, dans le même temps, simple, fiable et économique.

Cet objectif est atteint grâce à un dispositif d'armement et de sécurité du type précité dans lequel le stator du moteur électrique est situé à l'extérieur du boîtier et le rotor est entièrement contenu à l'intérieur du boîtier.

Au moins un organe d'entraînement magnétique du rotor, contenu dans le boîtier, est actionné magnétiquement par le stator, à travers le boîtier, ce par quoi l'élément d'armement est déplacé entre ses positions armée et désarmée.

Le boîtier du dispositif étant avantageusement hermétique (aux fluides), le stator ainsi que l'ensemble de la connectique qui y est liée, ne sont pas soumis aux conditions extrêmes de pression et de température existant dans l'espace intérieur du boîtier lorsque le dispositif est en fonctionnement.

Le dispositif selon l'invention ne fait donc pas intervenir de joints dynamiques tels que ceux utilisés dans les dispositifs de l'art antérieur. L'absence de joints dynamiques - et des frottements associés - réduit l'amplitude de la force motrice nécessaire à l'actionnement de l'élément d'armement. La consommation électrique pour l'actionnement est réduite, et les dimensions et la masse du dispositif sont limitées. De plus, un dispositif de limitation de couple pour gérer les fins de course n'est plus nécessaire.

L'absence de joints dynamiques ainsi, plus généralement, que le nombre limité de pièces mises en oeuvre dans le dispositif, confèrent au dispositif une meilleure fiabilité.

Enfin, le dispositif selon l'invention évite les risques de coincement dû au manque de lubrification après de longues périodes sans actionnement ou à l'oxydation des balais.

Selon une disposition préférée, le stator est disposé à la périphérie d'une portion de boîtier entourant l'organe d'entraînement magnétique du rotor.

Le stator comprend par exemple au moins une bobine.

Selon un exemple, l'organe d'entraînement magnétique du rotor peut être un aimant permanent solidaire de ou formant partie de l'élément d'armement. On comprend que, selon cette disposition, l'organe d'entraînement peut être un élément distinct de l'élément d'armement, ou il peut être formé par l'élément d'armement lui-même, lorsque celui-ci est réalisé dans une matière magnétique adaptée.

Selon un exemple, l'élément d'armement est adapté à pivoter autour d'un axe.

Pour la suite, on définit généralement la direction axiale du dispositif comme la direction de l'axe de pivotement de l'élément d'armement.

Sauf précision contraire, on définit une direction radiale comme une direction perpendiculaire à l'axe de pivotement et coupant cet axe.

L'élément d'armement peut alors être muni de moyens de transmission adaptés à transmettre le flux pyrotechnique et agencés pour venir se positionner en regard des zones d'entrée et de sortie lorsqu'il se trouve dans une position angulaire correspondant à sa position armée, et des moyens de blocage adaptés à bloquer le flux pyrotechnique et agencés pour venir se positionner entre les zones d'entrée et de sortie lorsqu'il se trouve dans une position angulaire correspondant à sa position désarmée.

Selon un exemple, les moyens de transmission sont formés par une ouverture traversante (évidement latéral, trou traversant, etc.) s'étendant selon une première direction sensiblement radiale, et les moyens de blocage comprennent une portion de blocage définie dans une direction formant un angle avec ladite première direction, l'angle étant sensiblement égal à l'angle de débattement de l'élément d'armement.

L'élément d'armement est par exemple percé d'un trou traversant adapté à venir se positionner en regard des zones d'entrée et de sortie lorsqu'il se trouve dans sa position armée, ledit trou laissant passer le flux pyrotechnique provenant de la zone d'entrée vers la zone de sortie. On comprend que le flux pyrotechnique, qui se présente généralement sous la forme d'une onde de détonation ou onde de choc, peut se propager dans l'air, à l'intérieur dudit trou traversant.

Lorsque l'élément d'armement est dans sa position désarmée, le flux pyrotechnique est par exemple arrêté par le matériau qui constitue l'élément d'armement, non conducteur d'ondes de détonation, généralement un métal.

Notamment dans les cas où la distance entre la zone d'entrée et la zone de sortie du dispositif est importante, les moyens de transmission du flux pyrotechnique peuvent aussi comprendre un relais pyrotechnique solidaire de l'élément d'armement, par exemple disposé dans son trou traversant dans le cas mentionné précédemment.

Typiquement, l'élément d'armement passe de sa position armée à sa position désarmée en pivotant dans un sens de désarmement d'un angle généralement compris entre 40 et 140°, de préférence entre 80° et 100°, encore plus préférentiellement sensiblement égal à 90°. Pour passer de sa position désarmée à sa position armée, l'élément d'armement pivote dans un sens d'armement, opposé au sens de désarmement, du même angle qu'indiqué précédemment.

Le dispositif selon l'invention comprend généralement des moyens de butée adaptés pour bloquer le mouvement de l'élément d'armement de sorte que l'élément d'armement est en butée dans sa position armée et dans sa position désarmée.

Selon un exemple, le dispositif d'armement et de sécurité comprend en outre un système de verrouillage en position de l'élément d'armement dans sa position désarmée et dans sa position armée.

Un tel système de verrouillage a pour fonction d'éviter que l'élément d'armement ne se déplace librement entre sa position armée et sa position désarmée en l'absence d'alimentation électrique du moteur.

Si l'élément d'armement est dans sa position armée au moment de l'arrêt de l'alimentation du moteur, le système de verrouillage le maintient dans cette position armée. De la même manière, si l'élément d'armement est dans sa position désarmée au moment de l'arrêt de l'alimentation du moteur, le système de verrouillage le maintient dans cette position désarmée.

Le système de verrouillage comprend par exemple un aimant primaire solidaire de l'élément d'armement, et un ensemble magnétique fixe par rapport au boîtier, l'ensemble magnétique étant adapté à coopérer avec l'aimant primaire pour le solliciter magnétiquement selon un système bistable vers une première position dans laquelle l'élément d'armement est dans sa position armée ou vers une deuxième position dans laquelle l'élément d'armement est dans sa position désarmée.

L'aimant primaire est généralement formé par un aimant permanent, solidaire de ou formant partie de l'élément d'armement lorsque celui-ci est réalisé dans un matériau magnétique adapté.

Selon un exemple particulier, l'aimant primaire peut être un organe d'entraînement magnétique du rotor, coopérant avec le stator pour l'entraînement de l'élément d'armement.

L'ensemble magnétique peut être positionné indifféremment à l'intérieur ou à l'extérieur du boîtier. Il peut par exemple s'agir d'au moins un aimant permanent ou électroaimant alimenté en courant continu.

L'ensemble magnétique peut être adapté pour repousser magnétiquement l'aimant primaire vers sa première et sa deuxième position. L'ensemble magnétique peut par exemple comprendre un aimant secondaire disposé selon une direction radiale située angulairement entre la direction de l'axe de l'aimant primaire lorsqu'il se trouve dans sa première position et sa direction lorsqu'il se trouve dans sa deuxième position.

Dans le cas d'un tel verrouillage par répulsion, il est préférable que le dispositif d'armement et de sécurité comprennent des moyens de butée adaptés pour bloquer le mouvement de l'élément d'armement dans sa position armée et dans sa position désarmée.

Selon une autre configuration, l'ensemble magnétique peut être adapté pour attirer magnétiquement l'aimant primaire vers sa première et sa deuxième position. L'ensemble magnétique peut par exemple comprendre au moins deux aimants secondaires agencés pour attirer l'aimant primaire respectivement vers sa première et sa deuxième position.

Selon encore un autre exemple, l'aimant primaire comprend une partie d'indexation et l'ensemble magnétique comprend le stator, ledit stator comportant au moins une portion d'anneau en matériau ferromagnétique muni d'au moins une première saillie et au moins une deuxième saillie s'étendant radialement vers l'intérieur de l'anneau, la partie d'indexation étant sollicitée vers l'une ou l'autre saillie, l'élément d'armement étant dans sa position armée lorsque la partie d'indexation est en regard de la première saillie et dans sa position désarmée lorsque la partie d'indexation est en regard de la deuxième saillie.

On comprend que la partie d'indexation est une partie de l'aimant primaire faisant saillie radialement vers l'extérieur (une direction radiale étant définie comme une direction orthogonale à l'axe de pivotement de l'aimant et passant par cet axe). Autrement dit, la distance radiale minimale entre le stator et l'aimant primaire est mesurée entre le stator et ladite partie d'indexation.

Les pôles saillants du stator, formés par les saillies ou dents, induisent un couple de crantage (« cogging torque » en anglais), tendant à ramener le rotor dans des positions d'équilibre stables dans lesquelles la réluctance du circuit magnétique défini entre le rotor et le stator est la plus faible. On sait que l'air a une réluctance supérieure au matériau ferromagnétique du stator. Lorsque la partie d'indexation est positionnée en face d'une saillie, le chemin parcouru dans l'air par l'induction magnétique issue du rotor est diminué par rapport au chemin parcouru par l'induction magnétique lorsque la partie d'indexation est en regard d'une portion du stator dépourvue de dent. La partie d'indexation tend donc naturellement à s'aligner et à rester aligné avec les dents du stator cranté. Si les positions d'alignement de l'aimant primaire coïncident avec les positions armée et désarmée de l'élément d'armement, on comprend que le couple de crantage participe au verrouillage de l'élément d'armement dans ces deux positions.

Il est souhaitable de pouvoir, à tout moment, connaître de manière certaine la position de l'élément d'armement. Dans ce but, selon une disposition avantageuse, le dispositif d'armement et de sécurité peut comprendre au moins un interrupteur magnétique situé à l'extérieur du boîtier et adapté pour être actionné en fonction de la position de l'élément d'armement par au moins un aimant permanent solidaire ou formant partie de l'élément d'armement. L'aimant permanent peut ainsi être un aimant annexe solidaire de l'élément d'armement, ou l'élément d'armement lui-même lorsque celui-ci est réalisé dans un matériau magnétique adapté. L'aimant permanent peut être, selon un exemple particulier, un organe d'entraînement magnétique du rotor. Il peut être, encore plus particulièrement, l'aimant primaire du système de verrouillage mentionné précédemment.

L'interrupteur magnétique est par exemple un interrupteur du type à lames souples aussi communément appelé interrupteur reed.

En cas d'urgence, notamment en cas de défaillance du moteur électrique, il peut également être nécessaire de déplacer manuellement l'élément d'armement.

De façon avantageuse, le dispositif d'armement et de sécurité comprend, dans ce but, des moyens d'entraînement manuel de l'élément d'armement, adaptés à être désaccouplés de l'élément d'armement dans au moins une configuration et en particulier lorsque le dispositif d'armement et de sécurité est dans son état de fonctionnement nominal, autrement dit hors cas d'actionnement des moyens d'entraînement manuel (i.e. cas d'urgence). Ces dispositions permettent de supprimer les couples et forces de frottement liés à l'étanchéité dynamique entourant lesdits moyens d'entraînement manuels.

Selon un exemple, les moyens d'entraînement manuel comprennent une poignée montée pivotante autour d'un axe parallèle à l'axe de pivotement de l'élément d'armement et mobile en translation dans la direction dudit axe entre une position active dans laquelle elle est couplée en rotation avec l'élément d'armement, et une position passive dans laquelle elle n'est pas couplée à l'élément d'armement.

Selon un exemple, les moyens d'entraînement manuel comprennent au moins un ressort sollicitant en permanence la poignée dans sa position passive.

L'invention concerne également une chaîne pyrotechnique comprenant un dispositif d'armement et de sécurité tel que défini précédemment, un tronçon amont de la chaîne pyrotechnique étant couplé à la zone d'entrée du boîtier et un tronçon aval de ladite chaîne pyrotechnique étant couplé à la zone de sortie du boîtier.

Le tronçon amont comprend généralement un détonateur. Le tronçon aval comprend généralement un organe fonctionnel terminal (actionné par le détonateur) et, éventuellement, une ligne de transmission détonique interposée entre le dispositif d'armement et de sécurité et l'organe terminal.

Plusieurs exemples de réalisation sont décrits dans le présent exposé. Toutefois, sauf précision contraire, les caractéristiques décrites en liaison avec un exemple de réalisation quelconque peuvent être appliquées à un autre exemple de réalisation.

### Brève description des dessins

L'invention sera bien comprise et ses avantages apparaîtront mieux, à la lecture de la description détaillée qui suit, de plusieurs modes de réalisation représentés à titre d'exemples non limitatifs. La description se réfère aux dessins annexés sur lesquels :
- La figure 1 est une vue en coupe longitudinale d'une chaîne pyrotechnique comprenant un dispositif d'armement et de sécurité selon un premier mode de réalisation de l'invention, l'élément d'armement du dispositif étant dans sa position armée ;
- La figure 2 illustre la chaîne pyrotechnique de la figure 1, l'élément d'armement étant représenté dans sa position désarmée ;
- La figure 3 montre la poignée d'entraînement manuel couplée à l'élément d'armement, en fonctionnement d'urgence ;
- La figure 4A est une vue de principe selon A-A de la figure 1, illustrant le système de verrouillage en position de l'élément d'armement ;
- La figure 4B est une vue de principe selon B-B de la figure 2 ;
- La figure 5 est une vue de principe selon A-A de la figure 1, illustrant un second mode de réalisation du système de verrouillage en position de l'élément d'armement ;
- La figure 6 est une vue de principe en coupe selon V-V de la figure 2, illustrant un troisième mode de réalisation du système de verrouillage en position de l'élément d'armement.

### Description détaillée de modes de réalisation

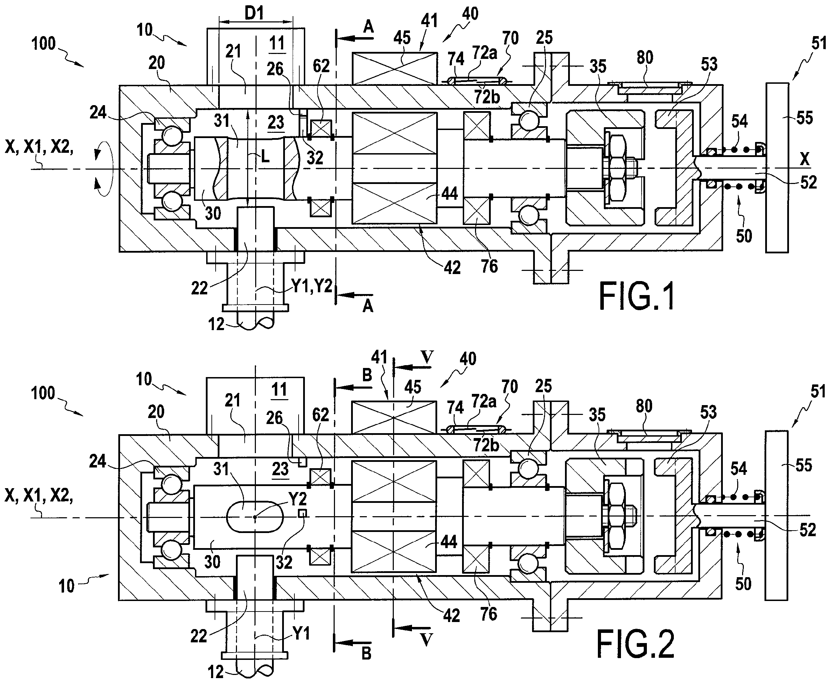

Sur la figure 1, on a représenté une chaîne pyrotechnique 100 comprenant :
- un tronçon amont ici sous la forme d'un détonateur 11,
- un tronçon aval ici sous la forme d'une ligne de transmission pyrotechnique 12 configurée pour transmettre l'onde de détonation issue du détonateur 11 vers un ou plusieurs organe(s) cible(s) non représenté(s), destinés notamment à allumer ou détruire ou séparer des composants, par exemple des étages de lanceur spatial, et
- un dispositif d'armement et de sécurité 10 (ci-après appelé le dispositif) selon un mode de réalisation de l'invention, disposé entre le tronçon amont (détonateur 11) et le tronçon aval (la ligne de transmission pyrotechnique 12) et destiné à permettre l'armement et le désarmement sélectif de la chaîne pyrotechnique 100.

Comme illustré notamment sur la figure 1, le dispositif 10 comprend un boîtier 20 délimitant un espace intérieur 23, fermé hermétiquement. L'espace intérieur du boîtier ne peut donc pas subir de dommages liés à l'atmosphère externe.

Dans l'exemple, le boîtier 20 présente une forme cylindrique d'axe X1, à section sensiblement circulaire.

Il comprend une zone d'entrée ouverte 21, à laquelle le détonateur 11 est relié de manière étanche au moyen de joint(s) statique(s) non représenté(s), et une zone de sortie ouverte 22, à laquelle la ligne de transmission pyrotechnique 12 est reliée de manière étanche de la même manière.

Pour que le flux pyrotechnique puisse atteindre le tronçon aval de la chaîne pyrotechnique, la longueur L (ci-après longueur de traversée) séparant le tronçon amont et le tronçon aval de la chaîne de transmission doit généralement être inférieure à une valeur limite, typiquement sensiblement égale au diamètre maximal D1 de l'élément en matériau pyrotechnique constituant le tronçon amont de la chaîne de transmission pyrotechnique (typiquement le détonateur), à son extrémité débouchant à l'intérieur du boîtier. Cette longueur est généralement comprise entre 2 et 10 mm.

Pour que la longueur de traversée soit inférieure à la valeur limite, il est possible de prévoir que le tronçon amont 11 et/ou le tronçon aval 12 de la chaîne pyrotechnique fasse en partie saillie à l'intérieur du boîtier 20, au niveau de la zone d'entrée 21 et/ou la zone de sortie 22, respectivement.

Sur la figure 1, par exemple, la ligne de transmission pyrotechnique 12 pénètre en partie dans l'espace intérieur 23 du boîtier 20.

La zone d'entrée 21 et la zone de sortie 22 sont positionnées en regard l'une de l'autre, le long d'un axe Y1, sensiblement orthogonal à la direction longitudinale X1 du boîtier.

Le boîtier 20 abrite un élément d'armement 30, qui, dans l'exemple, se présente sous la forme d'une tige s'étendant selon un axe X2 parallèle à l'axe X1 du boîtier, ici confondu avec celui-ci (et dénommé axe X dans la suite, par souci de concision).

L'élément d'armement 30 peut néanmoins présenter toute autre forme adaptée. Les caractéristiques décrites dans la suite en liaison avec la tige 30 sont donc également applicables à un élément d'armement de forme différente.

La tige 30 est interposée entre les zones d'entrée 21 et de sortie 22.

Elle est par ailleurs montée pivotante autour de son axe X, grâce à des paliers 24, 25 montés sur le boitier 20.

Elle est ainsi adaptée à passer d'une position désarmée dans laquelle elle bloque le passage d'un flux pyrotechnique entre la zone d'entrée 21 et la zone de sortie 22 à une position armée dans laquelle elle permet le passage du flux pyrotechnique entre lesdites zones, et inversement.

Dans l'exemple, la tige 30 est réalisée dans un matériau métallique. Toutefois, plus généralement, elle pourrait être réalisée dans tout matériau adapté, par nature, à bloquer le passage du flux pyrotechnique. Elle pourrait aussi n'être formée qu'en partie dans un tel matériau, ladite partie étant alors interposée entre les zones d'entrée et de sortie.

Pour permettre le passage du flux lorsqu'elle se trouve dans sa position armée, la tige 30 est pourvue de moyens de transmission, ici sous la forme d'un trou 31 traversant ladite tige 30 de part en part, selon une direction sensiblement orthogonale à l'axe de pivotement X, au droit des zones d'entrée et de sortie précitées.

Lorsque la tige 30 se trouve dans sa position armée, illustrée par la figure 1, l'axe Y2 du trou est sensiblement aligné avec les zones d'entrée et de sortie 21, 22, et un flux pyrotechnique, autrement dit une onde de détonation, provenant du détonateur, peut se déplacer depuis la zone d'entrée 21 jusqu'à la zone de sortie 22 du boîtier 20, à travers le trou 31 de la tige 30.

Le pivotement de la tige 30 est induit par un moteur électrique 40 contrôlé par une unité de commande 43. Le moteur utilisé est notamment un moteur du type à débattement limité, en particulier un moteur du type « rotary voice coil ».

Comme illustré sur la figure 1, le stator 41 du moteur électrique 40 est situé à l'extérieur du boîtier 20. Le rotor 42 est, lui, contenu entièrement à l'intérieur de l'espace délimité par le boîtier, le boîtier 20 étant ainsi interposé entre le rotor 42 et le stator 41.

Lorsqu'un flux pyrotechnique pénètre par la zone d'entrée 21 du boîtier 20, l'espace intérieur 23 est soumis à des conditions extrêmes de pression et de température. Le stator, ainsi que toute la connectique qui y est reliée, ne sont pas soumises à ces conditions, et restent ainsi préservées.

Le rotor 42 comprend ici un organe d'entraînement magnétique 44 sous la forme d'un aimant permanent 44 entourant la tige 30 et solidaire en rotation de celle-ci.

Le stator 41 comprend, dans l'exemple, deux bobines 45 (une seule est visible sur la figure 1) enroulées autour d'un anneau (non représenté) en matériau ferromagnétique entourant le carter, les deux bobines étant adaptées pour être alimentées en courant non-alternatif (continu ou haché) par l'unité de commande 43.

Le stator 41 est disposé à la périphérie d'une portion de boîtier 20 entourant l'organe d'entraînement magnétique 44.

L'alimentation électrique des bobinages du stator 41 induit un champ magnétique déplaçant autour de l'axe X l'organe d'entraînement magnétique du rotor 44, et la tige 30 dont il est solidaire.

L'amplitude de pivotement de la tige 30 est limitée par au moins deux butées mécaniques 26, 28 faisant saillie depuis la face interne du boîtier 20.

Pour coopérer avec ces butées, la tige 30 comporte par exemple au moins un ergot de positionnement 32 faisant saillie depuis sa face externe.

Dans l'exemple, la tige 30 a un débattement d'environ 90° entre ses deux positions extrêmes, dans lesquelles elle se trouve en butée.

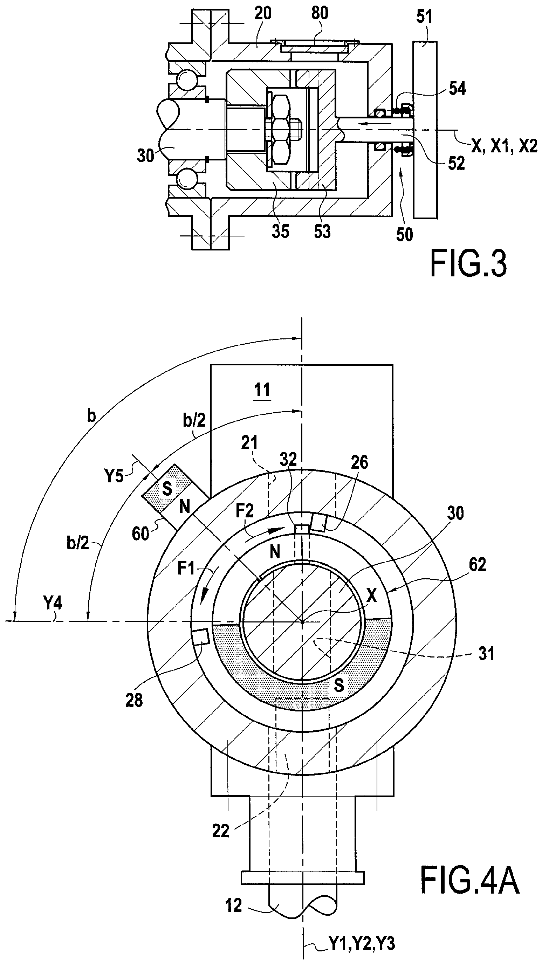

Les figures 1 et 4A illustrent la tige 30 dans sa position armée : l'ergot 32 est en contact avec la première butée 26.

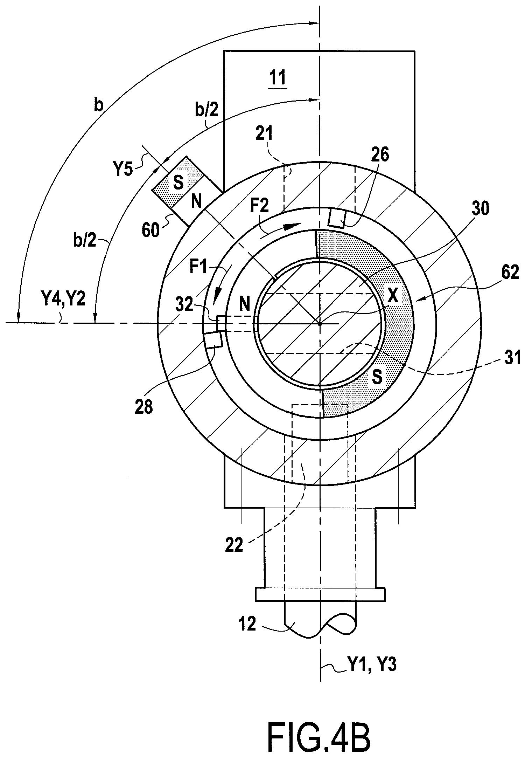

Après avoir pivoté d'un angle b représentant environ un quart de tour, dans le sens de désarmement F1 illustré sur la figure 4A, la tige 30 est dans sa position désarmée illustrée sur les figures 2 et 4B: l'ergot est en contact avec la deuxième butée 28.

On comprend que l'alimentation électrique du stator 41 permet de déplacer la tige 30 entre ses deux positions armée et désarmée. Pour assurer le maintien de la tige 30 dans la position préalablement réglée au moyen du moteur électrique 40 une fois que le stator 41 ne produit plus de champ magnétique (lorsque les bobinages ne sont plus alimentés électriquement), le dispositif d'armement et de sécurité 10 comprend un système de verrouillage en position de la tige.

Ce système de verrouillage en position comprend ici au moins un aimant primaire 62, solidaire de la tige 30, et un ensemble magnétique constitué ici d'un aimant secondaire 60, fixe par rapport au boîtier 20, l'aimant secondaire 60 étant configuré pour repousser l'aimant primaire 62 selon un système bistable vers une première position angulaire (illustrée sur la figure 4A) dans laquelle la tige 30 est dans sa position armée ou vers une deuxième position angulaire (illustrée sur la figure 4B) dans laquelle la tige 30 est dans sa position désarmée.

Dans l'exemple, l'aimant secondaire 60 est un aimant permanent situé sur la périphérie du boîtier 20 et l'aimant primaire 62 est un aimant permanent entourant la tige 30 et solidaire de celle-ci.

Comme illustré sur les figures 4A et 4B, l'axe principal le long duquel sont disposés les pôles Nord et Sud de l'aimant primaire 62 s'étend dans une direction radiale Y3 lorsque l'aimant primaire 62 se trouve dans sa première position (correspondant à une position armée de l'élément d'armement 30), et dans une direction radiale Y4 lorsque l'aimant primaire se trouve dans sa deuxième position (correspondant à une position désarmée de l'élément d'armement 30), les directions Y3 et Y4 formant entre elles l'angle b (sensiblement égal à 90°).

L'aimant secondaire 60 est positionné par rapport à la tige 30 de sorte que ses pôles nord et sud soient alignés dans une direction radiale (Y5), intermédiaire entre les directions Y3 et Y4.

Plus particulièrement, la direction radiale Y5 forme avec chacune desdites directions Y3 et Y4 un angle inférieur à b, de préférence sensiblement égal à b/2.

Dans l'exemple, l'aimant secondaire 60 est ainsi positionné angulairement entre les deux butées mécaniques 26, 28, de préférence à mi-chemin entre lesdites butées.

Le pôle de l'aimant secondaire orienté vers la tige 30 est appelé pôle principal. Dans l'exemple, il s'agit du pôle nord.

En outre, l'aimant primaire 62 est monté de sorte que, lorsque ses pôles sont alignés selon la même direction radiale Y5 que l'aimant secondaire 60 et lorsque dans le même temps la tige 30 est située dans une position angulaire intermédiaire entre ses positions armée et désarmée (de préférence à mi-chemin), le pôle de l'aimant primaire 62 orienté vers l'aimant secondaire 60 est le même que le pôle principal de l'aimant secondaire (ici son pôle nord).

Naturellement, les pôles nord des deux aimants 60, 62 se repoussent. L'aimant secondaire 60 étant fixe par rapport au boîtier 20, il contraint naturellement l'aimant primaire 62 en éloignement de sa position instable (qui se trouve à mi-chemin entre sa première et sa seconde position).

En conséquence, lorsque la tige 30 est dans sa position désarmée, la répulsion entre les aimants primaire et secondaire 60, 62 la maintient dans cette position. Il en est de même lorsque la tige 30 est dans sa position armée.

Comme illustré sur la figure 1, le dispositif d'armement et de sécurité 10 comprend un interrupteur magnétique 70 situé à l'extérieur du boîtier 20 et adapté pour être actionné en fonction de la position de la tige 30 par au moins un aimant permanent 76, ici solidaire de la tige 30.

L'interrupteur magnétique 70 est par exemple un interrupteur du type à lames souples aussi communément appelé interrupteur reed.

Comme il est connu en soi, un tel interrupteur comprend deux contacts souples magnétisés 72a, 72b, placés dans une bulle de verre 74. En présence d'un champ magnétique, les contacts 72a, 72b sont attirés l'un vers l'autre. Ils se rapprochent jusqu'à se toucher, laissant alors passer un courant électrique. Lorsque le champ magnétique cesse, les contacts 72a, 72b ne sont plus aimantés et s'écartent du fait de leur élasticité, de sorte que le courant est coupé.

Selon la position angulaire de la tige 30, et l'orientation de l'aimant permanent 76, l'interrupteur 70 est allumé ou éteint. Il est donc possible de savoir très facilement, par un simple contrôle visuel, si la tige 30 est dans sa position armée ou désarmée.

Dans l'exemple, le dispositif d'armement et de sécurité 10 comprend en outre des moyens d'entraînement manuel 50 de l'élément d'armement 30.

Ces moyens comprennent ici une poignée 51 montée pivotante autour de l'axe de pivotement X de la tige 30 et mobile en translation dans la direction dudit axe entre une position active dans laquelle elle est couplée en rotation avec ladite tige 30, et une position passive dans laquelle elle n'est pas couplée à la tige 30.

La poignée 51 comprend un axe matériel 52 monté à travers un orifice 29 du boîtier 20 et libre de coulisser et pivoter à l'intérieur de cet orifice, et une partie de préhension 55, fixée à la partie de l'axe 52 faisant saillie à l'extérieur du boîtier.

La poignée 51 comprend en outre, à l'autre extrémité de l'axe 52, des moyens de couplage 53 adaptés à coopérer par complémentarité de forme avec des moyens de couplage correspondant 35 de la tige 30 de façon à solidariser en rotation la tige 30 et la poignée 50.

En fonctionnement nominal du dispositif d'armement et de sécurité 10, la poignée 51 est en permanence sollicitée dans sa position passive par un ressort 54, monté entre ladite poignée (ici la partie de préhension 55) et la surface externe du boîtier 20.

En fonctionnement nominal, le pivotement de la tige 30 n'est donc pas transmis à la poignée 51.

En cas d'urgence cependant, la poignée 51 peut être déplacée manuellement vers sa position active. Il suffit d'exercer sur elle une force s'opposant à la force du ressort 54, de sorte que l'axe 52 se translate dans la direction longitudinale X jusqu'à ce que les moyens de coopération respectifs de la poignée 51 et de la tige 30 coopèrent pour solidariser en rotation les deux éléments.

Comme illustré sur les figures 1, 2 et 3, le boîtier 20 peut être muni d'un hublot ou fenêtre 80 permettant de visualiser si la poignée 51 est dans sa position passive ou active, et en déduire si l'élément d'armement est dans sa position armée ou désarmée.

Le premier mode de réalisation décrit ci-dessus en liaison avec les figures 1 à 4B n'est cependant pas limitatif.

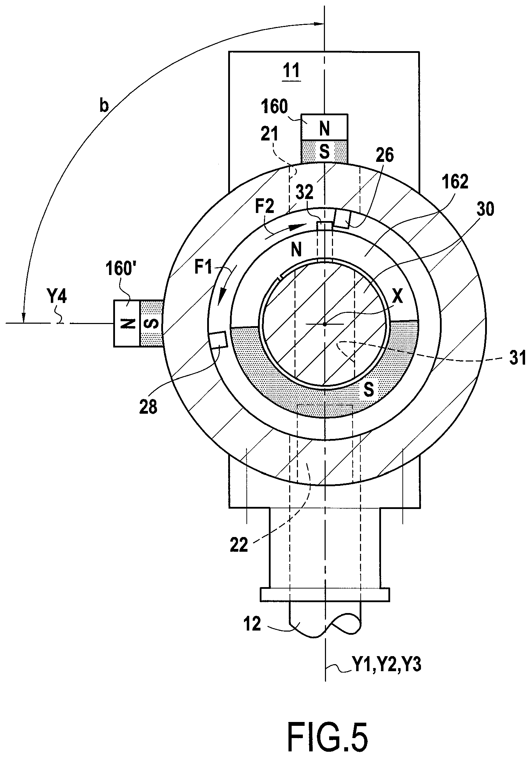

La figure 5, en particulier, illustre un second mode de réalisation du système de verrouillage en position de l'élément d'armement 30, fonctionnant par attraction magnétique et non par répulsion comme le système décrit en liaison avec le premier mode de réalisation.

Les autres éléments du dispositif n'étant pas modifiés par rapport au premier mode de réalisation décrit précédemment, ils ne sont pas décrits à nouveau dans la suite.

Le système de verrouillage comprend ici au moins un aimant primaire 162, solidaire de la tige 30, et un ensemble magnétique comprenant cette fois deux aimants secondaires 160, 160', fixes par rapport au boîtier 20, les aimants secondaires 160, 160' étant configurés pour attirer l'aimant primaire 162 selon un système bistable vers une première position angulaire (illustrée sur la figure 5) dans laquelle la tige 30 est dans sa position armée ou vers une deuxième position angulaire dans laquelle la tige 30 est dans sa position désarmée.

Dans l'exemple, chaque aimant secondaire 160, 160' est un aimant permanent situé sur la périphérie du boîtier 20 et l'aimant primaire 162 est un aimant permanent entourant la tige 30 et solidaire de celle-ci.

L'aimant primaire 162 est monté de sorte que, lorsqu'il se trouve dans sa première ou sa seconde position, son pôle (nord) orienté vers l'aimant secondaire 160, 160' le plus proche est opposé au pôle principal (sud) dudit aimant secondaire.

Naturellement, les pôles sud des aimants secondaires 160, 160' attirent le pôle nord de l'aimant primaire 162. Les aimants secondaires 160, 160' étant fixes par rapport au boîtier 20, ils sollicitent naturellement l'aimant primaire 162 vers ses deux positions stables.

En conséquence, lorsque la tige 30 est dans sa position armée, l'attraction entre l'aimant primaire 162 et l'aimant secondaire 160 la maintient dans cette position. De la même manière, lorsque la tige 30 est dans sa position désarmée, l'attraction entre l'aimant primaire 162 et l'aimant secondaire 160' la maintient en position.

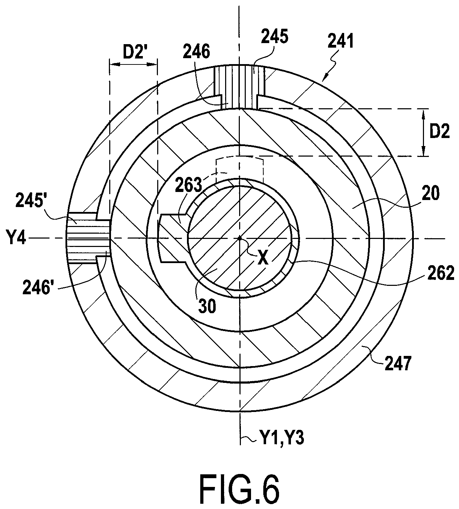

La figure 6 illustre un troisième mode de réalisation du système de verrouillage en position de l'élément d'armement 30, mettant en jeu le couple de crantage du moteur électrique comme il sera décrit dans la suite.

Les autres éléments du dispositif n'étant pas modifiés par rapport au premier mode de réalisation décrit précédemment, ils ne sont pas décrits à nouveau dans la suite.

Le système de verrouillage comprend ici un aimant primaire 262, solidaire de l'élément d'armement 30, et comprenant une partie d'indexation 263.

Dans l'exemple particulier, l'aimant primaire 262 est l'organe d'entraînement magnétique du rotor, de forme générale cylindrique, et la partie d'indexation 263 est un ergot faisant saillie depuis sa face extérieure.

Dans l'exemple, le stator 41 comprend un anneau en matériau ferromagnétique 247 entourant le boîtier 20, et muni d'une première saillie 246 et d'une deuxième saillie 246' s'étendant radialement vers l'intérieur de l'anneau 246. Dans l'exemple, les saillies forment des dents ou crans.

Une bobine 245, 245' est enroulée autour de chaque saillie 246, 246', chaque bobine 245 étant adaptée pour être alimentée en courant non-alternatif (continu ou haché) par l'unité de commande (non représentée).

La partie d'indexation 263, la première et la deuxième saillie 246, 246' sont agencées de telle sorte que lorsque la partie d'indexation 263 se trouve en regard de la première saillie 246, l'élément d'armement 30 est dans sa position armée et lorsque la partie d'indexation 263 se trouve en regard de la deuxième saillie, l'élément d'armement 30 est dans sa position désarmée.

La première et la deuxième saillie 246, 246' sont, dans l'exemple, disposées selon des directions radiales formant entre elles un angle d'environ 90°.

Comme il ressort de la figure 6, la distance D2, mesurée radialement entre l'aimant primaire 262 et le stator 241 est minimisée lorsque la partie d'indexation 263 se trouve en regard de l'une ou l'autre saillie 246, 246' du stator 241.

Or, on sait que, d'une part, l'air a une réluctance supérieure au matériau ferromagnétique de l'anneau 247 du stator 241, et d'autre part, le rotor tend naturellement à prendre une position dans laquelle la réluctance du circuit magnétique est minimale.

Lorsque la partie d'indexation 263 est positionné en face d'une saillie 246, 246', le chemin parcouru dans l'air par l'induction magnétique issue du rotor est diminué par rapport au chemin parcouru par l'induction magnétique lorsque la partie d'indexation est en regard d'une portion du stator ne comportant pas de saillie. Dans une telle position, la réluctance du circuit magnétique est donc, elle-aussi, diminuée.

En l'absence d'alimentation électrique des bobines 245, 245' du stator 241, la partie d'indexation 263 tend donc naturellement à s'aligner et à rester aligné avec les dents 246, 246' du stator, sous l'effet d'un couple appelé couple de crantage du moteur électrique. Les positions d'alignement de l'aimant primaire 262 coïncidant avec les positions armée et désarmée de l'élément d'armement 30, le couple de crantage assure le verrouillage de l'élément d'armement 30 dans ces deux positions.

## Revendications

1. Dispositif d'armement et de sécurité (10) pour une chaîne pyrotechnique (100), ledit dispositif comprenant :
- un boîtier (20) présentant une zone d'entrée (21) pour un flux pyrotechnique et une zone de sortie (22) pour ledit flux pyrotechnique,
- un élément d'armement (30) logé dans ce boîtier (20), entre les zones d'entrée (21) et de sortie (22), et adapté à se déplacer entre une position désarmée dans laquelle il bloque le passage du flux pyrotechnique entre la zone d'entrée (21) et la zone de sortie (22) et une position armée dans laquelle il permet le passage du flux pyrotechnique entre la zone d'entrée (21) et la zone de sortie (22), et
- des moyens d'entraînement de l'élément d'armement (30) entre sa position armée et sa position désarmée, comprenant un moteur électrique (40) muni d'un rotor (42) et d'un stator (41),
le dispositif (10) étant **caractérisé en ce que** le stator (41) du moteur électrique (40) est situé à l'extérieur du boîtier (20) et le rotor (42) est entièrement contenu à l'intérieur du boîtier (20).

2. Dispositif selon la revendication 1, dans lequel le boîtier est hermétique aux fluides.

3. Dispositif selon la revendication 1 ou 2, dans lequel l'élément d'armement (30) est monté pivotant autour d'un axe (X).

4. Dispositif selon la revendication 3, dans lequel l'élément d'armement (30) est percé d'un trou traversant (31) adapté à venir se positionner en regard des zones d'entrée (21) et de sortie (22) lorsque l'élément d'armement (30) se trouve dans sa position armée, ledit trou laissant passer le flux pyrotechnique provenant de la zone d'entrée (21) vers la zone de sortie (22).

5. Dispositif selon l'une quelconque des revendications 1 à 4, comprenant en outre des moyens de butée (26, 28) adaptés pour bloquer le mouvement de l'élément d'armement (30) de sorte que l'élément d'armement (30) est en butée dans sa position armée et dans sa position désarmée.

6. Dispositif selon l'une quelconque des revendications 1 à 5, comprenant en outre un système de verrouillage en position (60, 62) de l'élément d'armement (30) dans sa position désarmée et dans sa position armée.

7. Dispositif selon la revendication 6, dans lequel le système de verrouillage comprend un aimant primaire (62, 162, 262) solidaire de l'élément d'armement (30), et un ensemble magnétique (60 ; 160, 160' ; 246) fixe par rapport au boîtier (20), l'ensemble magnétique (60 ; 160, 160' ; 246) étant adapté à coopérer avec l'aimant primaire (62, 162, 262) pour le solliciter magnétiquement selon un système bistable vers une première position dans laquelle l'élément d'armement (30) est dans sa position armée ou vers une deuxième position dans laquelle l'élément d'armement (30) est dans sa position désarmée.

8. Dispositif selon l'une quelconque des revendications 1 à 7, comprenant en outre au moins un interrupteur magnétique (70) situé à l'extérieur du boîtier (20) et adapté pour être actionné en fonction de la position de l'élément d'armement (30) par au moins un aimant permanent (76) solidaire ou formant partie de l'élément d'armement (30).

9. Dispositif selon l'une quelconque des revendications 1 à 8, comprenant en outre des moyens d'entraînement manuel (50) de l'élément d'armement (30), adaptés à être désaccouplés de l'élément d'armement (30) dans au moins une configuration.

10. Dispositif selon la revendication 9, dans lequel l'élément d'armement (30) est monté pivotant autour d'un axe (X) et les moyens d'entraînement manuel comprennent une poignée (51) montée pivotante autour d'un axe parallèle à l'axe de pivotement (X) de l'élément d'armement (30) et mobile en translation dans la direction dudit axe (X) entre une position active dans laquelle elle est couplée en rotation avec l'élément d'armement (30), et une position passive dans laquelle elle n'est pas couplée à l'élément d'armement (30).

11. Dispositif selon la revendication 10, dans lequel les moyens d'entraînement manuel (50) comprennent en outre au moins un ressort (54) sollicitant en permanence la poignée (51) dans sa position passive.

12. Chaîne pyrotechnique (100) comprenant un dispositif d'armement et de sécurité (10) selon l'une quelconque des revendications 1 à 11, un tronçon amont (11) de la chaîne pyrotechnique (10) étant couplé à la zone d'entrée (21) du boîtier (20) et un tronçon aval (12) de ladite chaîne pyrotechnique (10) étant couplé à la zone de sortie (22) du boîtier (20).

13. Chaîne pyrotechnique selon la revendication 12, dans lequel le tronçon amont (11) de la chaîne pyrotechnique (10) comprend un détonateur.

14. Chaîne pyrotechnique selon la revendication 12 ou 13, dans lequel le tronçon aval (12) de la chaîne pyrotechnique (10) comprend une ligne de transmission détonique.

## Patentansprüche

1. Vorrichtung zum Scharfmachen und Sichern (10) für eine pyrotechnische Kette (100), wobei die Vorrichtung umfasst:
- ein Gehäuse (20), das eine Eingangszone (21) für einen pyrotechnischen Strom und eine Ausgangszone (22) für den pyrotechnischen Strom aufweist,
- ein Element zum Scharfmachen (30), das in diesem Gehäuse (20) zwischen der Eingangszone (21) und der Ausgangszone (22) angeordnet und dazu vorgesehen ist, sich zwischen einer nicht scharfen Position, in der es den Durchgang des pyrotechnischen Stroms zwischen der Eingangszone (21) und der Ausgangszone (22) blockiert, und einer scharfen Position, in der es den Durchgang des pyrotechnischen Stroms zwischen der Eingangszone (21) und der Ausgangszone (22) ermöglicht, zu bewegen, und
- Antriebsmittel für das Element zum Scharfmachen (30) zwischen seiner scharfen Position und seiner nicht scharfen Position, umfassend einen Elektromotor (40), der mit einem Rotor (42) und einem Stator (41) versehen ist,
wobei die Vorrichtung (10) **dadurch gekennzeichnet ist, dass** der Stator (41) des Elektromotors (40) außerhalb des Gehäuses (20) angeordnet ist, und der Rotor (42) zur Gänze in dem Gehäuse (20) enthalten ist.

2. Vorrichtung gemäß Anspruch 1, bei der das Gehäuse dicht gegen Flüssigkeiten ist.

3. Vorrichtung gemäß Anspruch 1 oder 2, bei der das Element zum Scharfmachen (30) um eine Achse (X) schwenkbar montiert ist.

4. Vorrichtung gemäß Anspruch 3, bei der das Element zum Scharfmachen (30) mit einem durchgehenden Loch (31) versehen ist, das dazu vorgesehen ist, gegenüber den Eingangs- (21) und Ausgangszonen (22) positioniert zu werden, wenn sich das Element (30) zum Scharfmachen in seiner scharfen Position befindet, wobei das Loch den pyrotechnischen Strom, der von der Eingangszone (21) kommt, zur Ausgangszone (22) durchlässt.

5. Vorrichtung gemäß einem der Ansprüche 1 bis 4, ferner umfassend Anschlagmittel (26, 28), die dazu vorgesehen sind, die Bewegung des Elements (30) zum Scharfmachen zu blockieren, so dass das Element (30) zum Scharfmachen in seiner scharfen Position und in seiner nicht scharfen Position am Anschlag ist.

6. Vorrichtung gemäß einem der Ansprüche 1 bis 5, ferner umfassend ein System zur Verriegelung (60, 62) des Elements (30) zum Scharfmachen in seiner nicht scharfen Position und in seiner scharfen Position.

7. Vorrichtung gemäß Anspruch 6, bei der das Verriegelungssystem einen primären Magneten (61, 162, 262), der mit dem Element (30) zum Scharfmachen verbunden ist, und eine magnetische Einheit (60; 160; 160'; 246), die in Bezug zum Gehäuse (20) fest ist, umfasst, wobei die magnetische Einheit (60; 160; 160'; 246) dazu vorgesehen ist, mit dem primären Magneten (62, 162, 262) zusammenzuwirken, um ihn magnetisch gemäß einem bistabilen System in eine erste Position zu bringen, in der das Element (30) zum Scharfmachen in seiner scharfen Position ist, oder in eine zweite Position, in der das Element zum Scharfmachen (30) in seiner nicht scharfen Position ist.

8. Vorrichtung gemäß einem der Ansprüche 1 bis 7, ferner umfassend mindestens einen Magnetschalter (70), der sich außerhalb des Gehäuses (20) befindet und dazu vorgesehen ist, in Abhängigkeit von der Position des Elements (30) zum Scharfmachen durch mindestens einen Dauermagneten (76), der mit dem Element (30) Scharfmachen verbunden oder ein Teil desselben ist, betätigt zu werden.

9. Vorrichtung gemäß einem der Ansprüche 1 bis 8, ferner umfassend manuelle Antriebsmittel (50) des Elements (30) zum Scharfmachen, die dazu vorgesehen sind, von dem Element (30) zum Scharfmachen in mindestens einer Ausführung entkoppelt zu sein.

10. Vorrichtung gemäß Anspruch 9, bei der das Element (30) zum Scharfmachen schwenkbar um eine Achse (X) montiert ist, und die manuellen Antriebsmittel einen Griff (51) umfassen, der schwenkbar um eine Achse parallel zur Schwenkachse (X) des Elements (30) zum Scharfmachen montiert und in Translation in Richtung der Achse (X) zwischen einer aktiven Position, in der er drehfest mit dem Element (30) zum Scharfmachen gekoppelt ist, und einer passiven Position, in der er nicht mit dem Element (30) zum Scharfmachen gekoppelt ist, beweglich ist.

11. Vorrichtung gemäß Anspruch 10, bei der die manuellen Antriebsmittel (50) ferner mindestens eine Feder (54) umfassen, die den Griff (51) permanent in seine passive Position drückt.

12. Pyrotechnische Kette (100), umfassend eine Vorrichtung zum Scharfmachen und Sichern (10) gemäß einem der Ansprüche 1 bis 11, wobei ein stromaufwärtiger Abschnitt (11) der pyrotechnischen Kette (10) mit der Eingangszone (21) des Gehäuses (20) gekoppelt ist, und ein stromabwärtiger Abschnitt (12) der pyrotechnischen Kette (10) mit der Ausgangszone (22) des Gehäuses (20) gekoppelt ist.

13. Pyrotechnische Kette gemäß Anspruch 12, bei der der stromaufwärtige Abschnitt (11) der pyrotechnischen Kette (10) einen Detonator umfasst.

14. Pyrotechnische Kette gemäß Anspruch 12 oder 13, bei der der stromabwärtige Abschnitt (12) der pyrotechnischen Kette (10) eine Detonik-Übertragungsleitung umfasst.

## Claims

1. An arming and safety device (10) for a pyrotechnic chain (100), said device comprising:
• a housing (20) presenting an inlet zone (21) for a pyrotechnic stream and an outlet zone (22) for said pyrotechnic stream;
• an arming element (30) housed in the housing (20), between the inlet (21) and outlet (22) zones, and adapted to move between a disarmed position in which it blocks the passage of the pyrotechnic stream between the inlet zone (21) and the outlet zone (22), and an armed position in which it allows the pyrotechnic stream to pass between the inlet zone (21) and the outlet zone (22); and
• drive means for driving the arming element (30) between its armed position and its disarmed position, the drive means comprising an electric motor (40) having a rotor (42) and a stator (41);
the device (10) being **characterized in that** the stator (41) of the electric motor (40) is situated outside the housing (20), and the rotor (42) is contained entirely inside the housing (20).

2. A device according to claim 1, wherein the housing is fluid-tight.

3. A device according to claim 1 or 2, wherein the arming element (30) is mounted to pivot about an axis (X).

4. A device according to claim 3, wherein the arming element (30) is pierced by a through hole (31) adapted to occupy a position facing the inlet (21) and outlet (22) zones when the arming element (30) is in its armed position, said hole allowing the pyrotechnic stream coming from the inlet zone (21) to pass towards the outlet zone (22).

5. A device according to any one of claims 1 to 4, further including abutment means (26, 28) adapted to block movement of the arming element (30) so that the arming element (30) is in abutment when in its armed position and when in its disarmed position.

6. A device according to any one of claims 1 to 5, further including a position locking system (60, 62) for locking the arming element (30) both in its disarmed position and also in its armed position.

7. A device according to claim 6, wherein the locking system comprises a primary magnet (62, 162, 262) secured to the arming element (30), and a magnetic assembly (60, 160, 160', 246) that is stationary relative to the housing (20), the magnetic assembly (60, 160, 160', 246) being adapted to co-operate with the primary magnet (62, 162, 262) to urge it magnetically in a bistable system towards a first position in which the arming element (30) is in its armed position or else towards a second position in which the arming element (30) is in its disarmed position.

8. A device according to any one of claims 1 to 7, further including at least one magnetic switch (70) situated outside the housing (20) and adapted to be actuated as a function of the position of the arming element (30) by at least one permanent magnet (76) secured to or forming part of the arming element (30).

9. A device according to any one of claims 1 to 8, further including manual drive means (50) for driving the arming element (30), the manual drive means being adapted to be decoupled from the arming element (30) in at least one configuration.

10. A device according to claim 9, wherein the arming element (30) is mounted to pivot about an axis (X), and the manual drive means comprise a handle (51) mounted to pivot about an axis parallel to the pivot axis (X) of the arming element (30) and movable in translation along the direction of said axis (X) between an active position in which it is coupled in rotation with the arming element (30) and a passive position in which it is not coupled to the arming element (30).

11. A device according claim 10, wherein the manual drive means (50) further include at least one spring (54) continuously urging the handle (51) towards its passive position.

12. A pyrotechnic chain (100) comprising an arming and safety device (10) according to any one of claims 1 to 11, an upstream segment (11) of the pyrotechnic chain (10) being coupled to the inlet zone (21) of the housing (20), and a downstream segment (12) of said pyrotechnic chain (10) being coupled to the outlet zone (22) of the housing (20).

13. A pyrotechnic chain according to claim 12, wherein the upstream segment (11) of the pyrotechnic chain (10) comprises a detonator.

14. A pyrotechnic chain according to claim 12 or 13, wherein the downstream segment (12) of the pyrotechnic chain (10) comprises a detonation transmission line.
